# EUROPEAN PATENT APPLICATION

(11) **EP 3 660 740 A1**
(43) Date of publication of application: **03.06.2020**
(21) Application number: 19211223.3
(22) Date of filing: 25.11.2019
(51) Int. Cl.: G06K 9/20, H04N 1/00, G06K 9/00

(54) **IMAGE FORMING APPARATUS, IMAGE FORMING SYSTEM, IMAGE FORMING METHOD, AND CARRIER MEANS**

(30) Priority: 27.11.2018 JP 2018221644
(71) Applicant: Ricoh Company, Ltd., Tokyo 143-8555 (JP)
(72) Inventor: TANAKA, Yuudai, Tokyo 143-8555 (JP); KUNIMI, Keiji, Tokyo 143-8555 (JP)
(74) Representative: Watkin, Timothy Lawrence Harvey

(57) **Abstract**

An image forming apparatus (101) includes an operation accepting device (303) configured to receive an instruction for copying an image of a document from a user, a biometric information acquiring device (304) configured to acquire biometric information of the user, and an image forming unit (308) configured to embed user information in the image, the user information including one of the biometric information of the user and information for specifying the biometric information of the user, and print the image having the user information embedded, on a recording medium to output a copied image.

## Description

### BACKGROUND

### Technical Field

The present invention relates to an image forming apparatus, an image forming system, an image forming method, and carrier means.

### Description of the Related Art

The background image forming system authenticates a user based on biometric information such as a facial image and a fingerprint, and allows the user who succeeds in authentication to print out using an image forming apparatus.

In some image forming systems, print target data and the user fingerprint are stored in a print data storage device. When printing the print target data, the fingerprint of the user who instructs printing is compared with the stored fingerprints, and based on matching, printing by the user is allowed (See Japanese Patent Application Publication No. JP-2001-236198A).

The above-described systems cannot identify the user, unless information on the user is previously stored.

### SUMMARY

In view of the above, the following describes an image forming apparatus, an image forming system, an image forming method, and an image forming control program, each of which is capable of identifying a user who instructs to copy an image, from the image to be copied.

Example embodiments include an image forming apparatus including an operation accepting device to receive an instruction for copying an image of a document from a user, a biometric information acquiring device to acquire biometric information of the user, and an image forming unit to embed user information in the image, the user information including one of the biometric information of the user and information for specifying the biometric information of the user, and print the image having the user information embedded, on a recording medium to output a copied image.

Example embodiments include an image forming system including the image forming apparatus.

Example embodiments include an image forming method performed by the image forming apparatus, and an image forming control program.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIGS. 1A and 1B are diagrams illustrating examples of a system configuration of an image forming apparatus according to an embodiment;
FIG. 2 is a diagram illustrating an example of a hardware configuration of the image forming apparatus according to the embodiment;
FIG. 3 is a diagram illustrating an example of a functional configuration of an image forming system according to a first embodiment;
FIG. 4 is a flowchart illustrating an example of copy processing according to the first embodiment;
FIGS. 5A to 5F are views explaining document data and user information according to the first embodiment;
FIG. 6 is a flowchart illustrating an example of print processing according to the first embodiment;
FIG. 7 is a sequence chart illustrating an example of the copy processing according to the first embodiment;
FIG. 8 is a flowchart illustrating an example of user information display processing according to the first embodiment;
FIG. 9 is a flowchart illustrating an example of copy processing according to a second embodiment;
FIG. 10 is a sequence chart illustrating the example of the copy processing according to the second embodiment;
FIG. 11 is a diagram illustrating an example of a functional configuration of an image forming system according to a third embodiment; and
FIG. 12 is a flowchart illustrating an example of copy processing according to the third embodiment.

The accompanying drawings are intended to depict embodiments of the present invention and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

In regard to an image forming apparatus that copies a document such as a paper or an image, a request for identifying a user who has copied the image from a copied image exists. However, in the related art, it is impossible to identify the user who has copied the image from the copied image.

An image forming apparatus that performs copying according to an embodiment of the present invention, which will be described below, can identify a user who copies an image from the copied image.

A description will hereinafter be made on the embodiment of the present invention with reference to the accompanying drawings.

### System Configuration

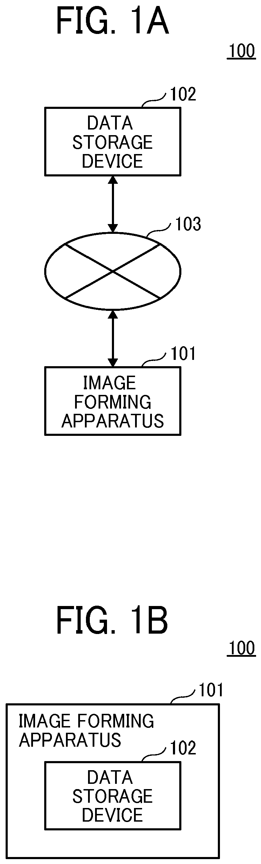

FIGS. 1A and 1B are diagrams each illustrating an example of a system configuration of an image forming system according to the embodiment. In the example illustrated in FIG. 1A, in an image forming system 100, an image forming apparatus 101 and a data storage device 102 are communicably connected to each other, for example. via a network 103 such as the Internet or a local area network (LAN). The data storage device 102 in this example is implemented by a server apparatus, implemented by a general-purpose computer.

As another example, as illustrated in FIG. 1B, the data storage device 102 may be incorporated in the image forming apparatus 101. The data storage device 102 in this example is a memory.

The image forming apparatus 101 at least have a copy function. The image forming apparatus 101 is, for example, a multifunction peripheral/printer/product (MFP) in which a copy function, a scan function, a print function, a facsimile function, and the like are provided in one casing, or electronic equipment having the copy function such as a copier. For example, the image forming apparatus 101 reads a document as a copy target according to a copy operation by a user, and performs color printing or monochrome printing of read document data on a print medium such as paper.

In addition to normal printing such as the normal color printing or the normal monochrome printing (hereinafter referred to as visible printing), the image forming apparatus 101 according to the present embodiment has a function of performing invisible printing to print information that is difficult to recognize visually.

For example, the image forming apparatus 101 uses a toner, an ink, or a ribbon that is further difficult to see, for example, a special toner, a special ink, or a special ribbon that can be read by using light with a specific wavelength such as infrared light or ultraviolet light or the like, so as to perform the invisible printing by means of the color printing or the monochrome printing.

As an example, the image forming apparatus 101 performs the color printing using a color toner, and performs infrared (IR) toner printing to print the image using an IR toner that is difficult to recognize visually and can be recognized using a special device such as an infrared camera.

The IR toner printing is an example of the invisible printing to print the image that is difficult to recognize visually. The invisible printing is not limited to printing using the IR toner, but may be printing using a special toner that can be recognized visually when being irradiated with the ultraviolet light, black light, or the like, for example.

Furthermore, the image forming apparatus 101 is not limited to adopting a laser method for performing the printing using the toner, but may perform the invisible printing by adopting an inkjet method for performing the printing using the ink or a thermal transfer method for performing the printing using the ribbon.

The invisible printing only has to be the printing that is more difficult to see than the visible printing, and it is not essential that the invisible printing is impossible to see. For example, the invisible printing can include such printing that, when the information is printed on ground in a specified color, the information is difficult to be determined but can slightly be seen, and it is recognized that something is printed.

Furthermore, the invisible printing may be printing such as printing by digital watermark in which, for example, a similar toner, a similar ink, a similar ribbon, or the like to the toner, the ink, the ribbon, or the like for the visible printing is used to print a minute dot pattern, which is difficult to be recognized visually with naked eyes, on a specified position of a copied image, so as to embed the information. In such a case, the digitally watermarked dot pattern, which is embedded in the specified position of the copied image, is read. In this way, the information embedded in the copied image can be extracted.

In addition, the image forming apparatus 101 has a function of acquiring biometric information of the user, and has a function of embedding user information including the biometric information of the user or information for specifying the biometric information of the user in the copied image that is printed according to the copy operation by the user.

For example, the biometric information of the user, which is acquired by the image forming apparatus 101, can include various images that can be used to identify the user, and examples of such images are a face, a fingerprint, an iris, a vein, and the like of the user.

Preferably, the image forming apparatus 101 prints the user information by the invisible printing on the copied image printed according to the copy operation by the user. For example, in the case where the biometric information is a face image of the user, the image forming apparatus 101 prints the user information including the face image of the user by the invisible printing on the copied image printed according to the copy operation by the user.

In this way, for example, in the case where the invisible printing is the IR toner printing, it is possible to check the face image of the user who has copied the copied image by using the infrared light. Thus, with the image forming apparatus 101 according to the present embodiment, the user who copies can be specified from the copied image. However, the image forming apparatus 101 is not limited thereto, and may print the image of the fingerprint, the iris, the vein, or the like (another example of the biometric information) on the copied image that is printed according to the copy operation by the user.

Preferably, any additional information such as various types of information on copy processing (hereinafter referred to as attribute information) may associated with the user information to be printed on the copied image by the invisible printing, for example, as attribute data. Examples of attribute information include, but not limited to, information on the image forming apparatus 101 that has performed the copying, a date and time of the copying, a location of the copying, and the like. This enables to specify the image forming apparatus 101 that has performed the copying, the date and the time, the location, and the like from the copied image.

Preferably, the image forming apparatus 101 has functions of reading the user information, which is printed on the copied image by the invisible printing, and outputting the user information. For example, in the case where the biometric information is the face image of the user, the image forming apparatus 101 reads the face image of the user and the attribute information from the copied image according to an operation to display the user information by the user, an administrator, or the like, so as to be able to display the user information on an operation panel of the image forming apparatus 101, or the like.

In this way, with the image forming apparatus 101 according to the present embodiment, it is possible to further easily identify the user who performs the copying from the copied image.

As another example, the image forming apparatus 101 may store the biometric information of the user, which is acquired according to the copy operation by the user, in the data storage device 102, and may embed the information for specifying the biometric information of the user (for example, identification information, a barcode, or the like) in the copied image.

For example, the image forming apparatus 101 may print the user information, which includes the barcode, a two-dimensional code, or the like for specifying the biometric information of the user, by the invisible printing on the copied image printed according to the copy operation by the user. In such a case, the image forming apparatus 101 reads the user information from the copied image, and uses the information for specifying the biometric information of the user included in the user information, so as to be able to acquire the biometric information of the user from the data storage device 102. In addition, the image forming apparatus 101 can display the acquired biometric information of the user on the operation panel or the like, for example.

The data storage device 102 is a storage device in which the image forming apparatus 101 can store the biometric information of the user, the user information, and the like, and the data storage device 102 may be any implemented by an information processing apparatus (general-purpose computer) that operates as a cloud service, a database, a server, or a memory.

With the above system configuration, according to the present embodiment, the image forming apparatus 101 that performs the copying can identify the user who has performed the copying from the copied image.

In addition, the image forming apparatus 101 prints the user information by the invisible printing on the copied image printed according to the copy operation by the user, so as to be able to suppress an information on the copied image.

Furthermore, the image forming apparatus 101 has the function of reading the user information printed by the invisible printing, and can output the information on the user who has copied the copied image according to the operation by the user, the administrator, or the like, for example. Thus, it is possible to further easily identify the user who performs the copying from the copied image.

### Hardware Configuration

### (Hardware Configuration of Image Forming Apparatus)

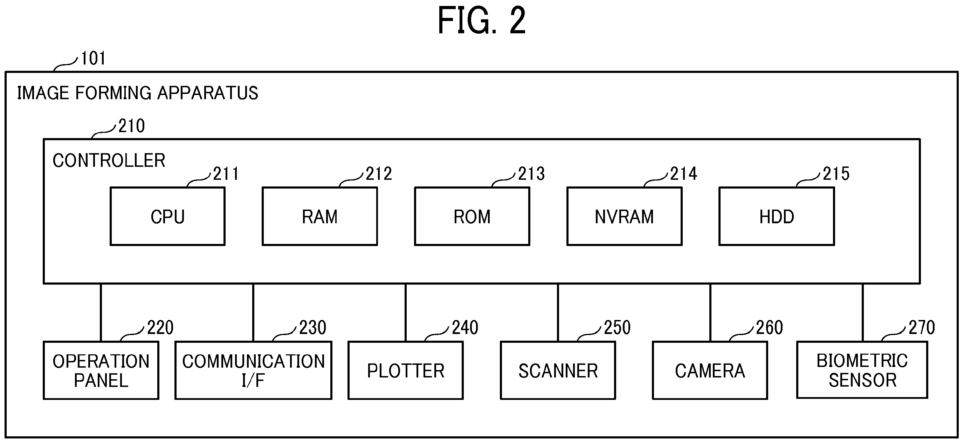

FIG. 2 is a diagram illustrating an example of a hardware configuration of the image forming apparatus according to the embodiment. The image forming apparatus 101 includes a controller 210, an operation panel (a control panel) 220, a communication interface (I/F) 230, a plotter 240, a scanner 250, a camera 260, a biometric sensor 270, and the like, for example.

The controller 210 has a computer configuration and, for example, includes a central processing unit (CPU) 211, random access memory (RAM) 212, read only memory (ROM) 213, non-volatile RAM (NVRAM) 214, a hard disk drive (HDD) 215, and the like.

The ROM 213 is non-volatile memory that stores a program for activating the image forming apparatus 101, data, and the like. The RAM 212 is volatile memory used as a work area for the CPU 211, or the like. For example, the NVRAM 214 is non-volatile writable memory that stores setting information of the image forming apparatus 101, and the like. The HDD 215 is a large-capacity storage device that stores various programs, data, and the like.

The CPU 211 is an arithmetic unit that loads the programs, the data, the setting information, and the like from the ROM 213, the NVRAM 214, the HDD 215, and the like onto the RAM 212 and executes processing to implement overall control and the functions of the image forming apparatus 101.

The operation panel 220 is implemented by a computer such that the operation panel 220 includes: an input device such as a CPU, a memory, a touchscreen or an operation button that accepts the user input; a display device such as a light emitting diode (LED) display for presenting a display screen; and the like. The communication I/F 230 is a communication interface used to connect the image forming apparatus 101 to the network 103 or the like. The operation panel 220 may be provided separately, or removable, from a main body of the image forming apparatus 101.

The plotter 240 is a printer that prints print data on the print medium such as paper. In addition to the function of performing the visible printing such as the color printing and the monochrome printing, the plotter 240 has a function of performing the above-described invisible printing.

For example, in the case where the plotter 240 performs the printing by the laser method, the plotter 240 has a function of performing the visible printing using four-color toners of cyan (C), magenta (M), yellow (Y), and key plate (K), and also has a function of performing the invisible printing using the IR toner or the like. Alternatively, instead of the K toner, an invisible toner such as the IR toner may be installed in the plotter 240. In this way, the plotter 240 may have the function of performing the invisible printing using the invisible toner while performing the visible printing using the C, M, and Y toners.

The scanner 250 reads the document or the like as the copy target. The scanner 250 has a function of reading the image that is printed by the visible printing, and also has a function of reading the image that is printed by the invisible printing.

For example, similar to a general scanner, the plotter 240 has the function of reading the image that is printed by the visible printing, and also has a function of using the infrared light to read the image that is printed using the IR toner.

The camera 260 is an imaging device that captures an image (for example, an image of the face, the iris, the vein, or the like) of the user who uses the image forming apparatus 101. Here, the image of the user is an example of the biometric information of the user.

The biometric sensor 270 is a device that acquires the biometric information (for example, the fingerprint, an iris pattern, a vein pattern, or the like) of the user who uses the image forming apparatus 101. The camera 260 and the biometric sensor 270 may be attached externally to an outer side of the image forming apparatus 101.

Next, a description will be made on a functional configuration of the image forming system 100 according to a first embodiment.

### Functional Configuration

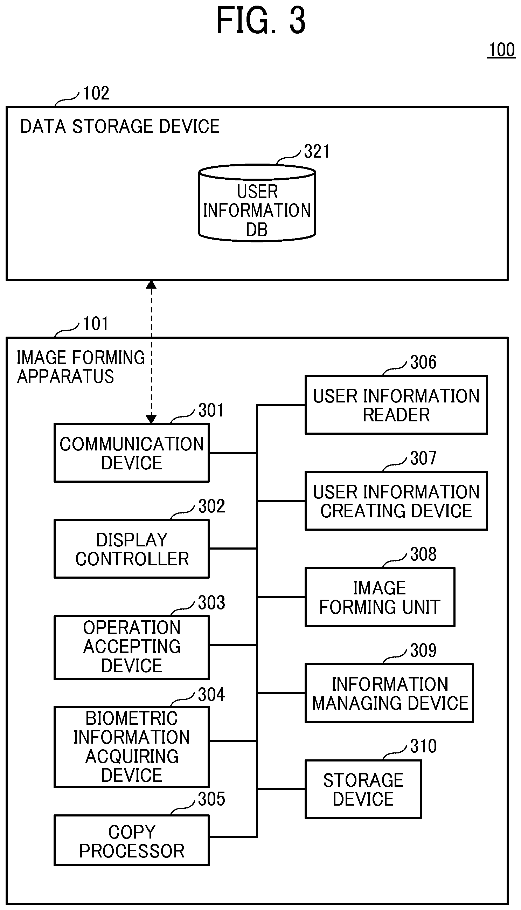

FIG. 3 is a diagram illustrating an example of a functional configuration of the image forming system 100 according to the first embodiment. For example, the image forming apparatus 101 executes a control program by the CPU 211 illustrated in FIG. 2, to implement a communication device 301, a display controller 302, an operation accepting device 303, a biometric information acquiring device 304, a copy processor 305, a user information reader 306, a user information creating device 307, an image forming unit 308, an information managing device 309, a storage device 310, and the like.

Note that, of each of the above functional configurations, at least a part thereof may be implemented by the operation panel 220, the communication I/F 230, the biometric sensor 270, and the like illustrated in FIG. 2.

The communication device 301 is implemented by the program executed by the CPU 211, the communication I/F 230, and the like illustrated in FIG. 2, and connects the image forming apparatus 101 to the network 103 to enable the image forming apparatus 101 to communicate with the data storage device 102 and the like.

The display controller 302 is implemented by the program executed by the CPU 211, the operation panel 220, and the like illustrated in FIG. 2, for example, and controls the display of the operation panel 220 to display various screens such as a login screen, an operation accepting screen, an authentication screen, and a user information display screen.

The operation accepting device 303 is implemented by the program executed by the CPU 211, the operation panel 220, and the like illustrated in FIG. 2, for example, and accepts various operations input by the user via the operation panel 220, such as a login operation, the copy operation, an authentication operation, and the user information display operation.

The biometric information acquiring device 304 is implemented by the program executed by the CPU 211, the camera 260, and the biometric sensor 270 illustrated in FIG. 2, for example, and acquires the biometric information of the user who uses the image forming apparatus 101.

For example, the biometric information acquiring device 304 uses the camera 260 to acquire the face image, an iris image, a vein image, or the like of the user who uses the image forming apparatus 101. Alternatively, the biometric information acquiring device 304 uses the biometric sensor 270, such as a sensor, to acquire the fingerprint, the iris pattern, the vein pattern, or the like of the user who uses the image forming apparatus 101. The face image, the iris image, the vein image, the fingerprint, the iris pattern, the vein pattern, and the like are examples of the biometric information of the user, and another biometric information may be used.

The copy processor 305, which is implemented by the program executed by the CPU 211 illustrated in FIG. 2, for example, uses the scanner 250 illustrated in FIG. 2 to read the information that is visibly printed on the document as the copy target, and creates the document data to be visibly printed on the copied image. The copy processor 305 also has a function of creating the document data according to an operation by the user such as double-sided printing, multiple-page printing, scale-up/down printing.

The user information reader 306 is implemented by the program executed by the CPU 211 illustrated in FIG. 2, for example, and uses the scanner 250 illustrated in FIG. 2 to read the user information that is embedded in the copied image. For example, the user information reader 306 uses an infrared light source of the scanner 250 to read the user information that is printed on the copied image by the IR toner.

The user information creating device 307 is implemented by the program executed by the CPU 211 illustrated in FIG. 2, for example, and creates the user information to be embedded in the copied image. Such user information includes at least one of the biometric information of the user who performs the copy operation and the information for specifying the biometric information of the user.

For example, the user information created by the user information creating device 307 can include the face image, the fingerprint image, the iris pattern image, the vein pattern image, or the like of the user acquired by the biometric information acquiring device 304.

As another example, the user information created by the user information creating device 307 may include, instead of (or in addition to) the biometric information of the user, the information (for example, the barcode, the identification information, or the like) for specifiying the biometric information of the user.

Furthermore, the user information created by the user information creating device 307 may include the attribute information such as information on the image forming apparatus 101 that creates the copied image and information on a copy status.

The image forming unit 308 is implemented by the program executed by the CPU 211 illustrated in FIG. 2, for example, and embeds the user information that includes the biometric information of the user or the information for specifying the biometric information of the user in the copied image to be printed according to the copy operation by the user.

For example, the image forming unit 308 uses the plotter 240 illustrated in FIG. 2 to perform the visible printing of the document data created by the copy processor 305 on the print medium such as the paper and to perform the invisible printing of the user information created by the user information creating device 307 on the print medium.

The information managing device 309 is implemented by the program executed by the CPU 211 illustrated in FIG. 2, for example, and stores the biometric information of the user who performs the copy operation, the attribute information, the user information, and the like in the data storage device 102.

For example, the information managing device 309 stores the information for specifying the biometric information of the user (the identification information, the barcode, and the like), the biometric information of the user, and the attribute information, in a user information database (DB) 321 of the data storage device 102, in association. The attribute information may include information such as an apparatus name, a model, and location information of the image forming apparatus 101 that has performed the copying, date and time, number of copies, and a print image, for example.

In addition, based on the information for specifying the biometric information of the user, the information managing device 309 can acquire the biometric information of the user, the attribute information, and the like from the data storage device 102.

The storage device 310 is implemented by the program executed by the CPU 211, the HDD 215, the RAM 212, and the like illustrated in FIG. 2, for example. The storage device 310 temporarily stores the biometric information acquired by the biometric information acquiring device 304, the document data created by the copy processor 305, the user information created by the user information creating device 307, and the like, for example.

The functional configuration of the image forming system illustrated in FIG. 3 is an example. As illustrated in FIG. 1B, when the data storage device 102 is incorporated in the image forming apparatus 101, the user information DB 321 may be stored in the storage device 310 of the image forming apparatus 101.

### Processing Flow

Next, a description will be made on a processing flow of an image forming method according to the first embodiment.

### Copy Processing

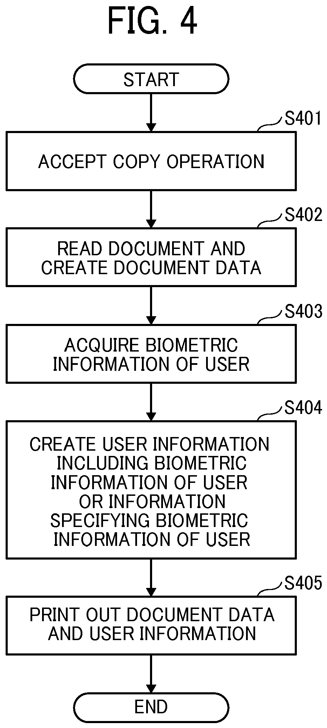

FIG. 4 is a flowchart illustrating an example of the copy processing according to the first embodiment. Such processing illustrates an overview of the copy processing that is executed when the image forming apparatus 101 accepts the copy operation by the user.

In step S401, when the operation accepting device 303 of the image forming apparatus 101 accepts the copy operation by the user, the image forming apparatus 101 executes processing in step S402 onward. For example, the user sets the document in a document reading section (for example, an exposure glass) of the scanner 250 in the image forming apparatus 101, and selects a "COPY" button from an operation screen displayed on the operation panel 220, to instructs to perform the copy operation.

In step S402, the copy processor 305 of the image forming apparatus 101 controls the scanner 250 to read the image that is visibly printed on the document set in the document reading section, and creates the document data that is visibly printed on the copied image. The document data created by the copy processor 305 is temporarily stored in the storage device 310 or the like, for example.

In step S403, the biometric information acquiring device 304 of the image forming apparatus 101 acquires the biometric information of the user who instructs the copy operation.

For example, in the case where the biometric information is the face image, the biometric information acquiring device 304 instructs the camera 260 illustrated in FIG. 2 to capture the face image of the user. Here, an orientation of the camera 260 is set in advance such that the face of the user who operates the image forming apparatus 101 is within a capturing range.

Meanwhile, in the case where the biometric information is the fingerprint information, the biometric information acquiring device 304 instructs the biometric sensor 270 illustrated in FIG. 2 to acquire the user fingerprint information.

The biometric information acquiring device 304 may acquire the biometric information of the user, which is acquired and stored in the storage device 310 in advance, when the user logs in to the image forming apparatus 101 by biometric authentication, for example.

In step S404, the user information creating device 307 of the image forming apparatus 101 creates the user information that includes one of the biometric information of the user acquired by the biometric information acquiring device 304 and the information for specifying the biometric information of the user.

In step S405, the image forming unit 308 of the image forming apparatus 101 prints the document data created by the copy processor 305 and the user information created by the user information creating device 307 on the print medium such as paper.

Preferably, the image forming unit 308 prints the document data created by the copy processor 305 by the visible printing such as the color printing or the monochrome printing, and prints the user information created by the user information creating device 307 by the invisible printing such as the IR toner printing.

### Document Data and User Information

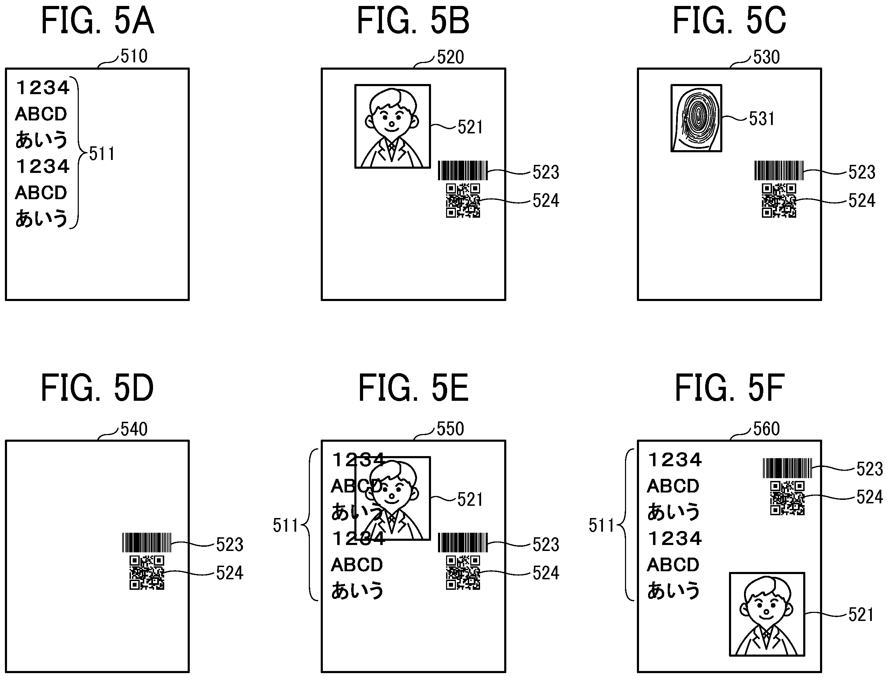

FIGS. 5A to 5F illustrate views for explaining the document data and the user information according to the first embodiment.

FIG. 5A illustrates an example image of document data 510 that is created by the copy processor 305. Here, as an explanatory example, as illustrated in FIG. 5A, the document data 510 includes character strings 511. However, this is merely an example, and the document data 510 may include the image such as a photograph or a figure, for example.

FIG. 5B illustrates an example image of user information 520 in the case where the biometric information of the user is the face image. In such an example, the user information 520 includes, as the biometric information of the user, the face image 521 of the user, that is acquired by the camera 260, as the biometric information acquisition unit 304.

In addition, the user information 520 may include the attribute information that includes at least one of the apparatus name, the model, and the location information of the image forming apparatus 101, the date and the time, the number of copies, the print image, and the like. In the example illustrated in FIG. 5B, the user information 520 includes a two-dimensional code 524 such as a QR code® acquired by coding the attribute information.

Furthermore, as illustrated in FIG. 5B, the user information 520 may include a barcode 523. The barcode 523 may be acquired by coding the attribute information, or may be acquired by coding the user information 520, the identification information for identifying the biometric information such as a face image 521, or the like.

Just as described, the user information 520 can include, for example, the image such as the face image 521 and the codes such as the barcode 523 and the two-dimensional code 524. In addition, the user information 520 may include a character string or the like that represents the attribute information.

FIG. 5C illustrates an example of user information 530 in the case where the biometric information of the user is the fingerprint. In such a case, the user information 530 includes, as the biometric information of the user, a fingerprint image 531 of the user acquired by the biometric sensor 270, operating as biometric information acquiring device 304. Note that the barcode 523 and the two-dimensional code 524 are the same as those in the user information 520 described with reference to FIG. 5B and thus will not be described herein.

FIG. 5D illustrates an example of a case where user information 540 includes the information for specifying the biometric information of the user instead of the biometric information of the user. In such a case, the user information 540 includes, for example, as the information for specifying the biometric information of the user, the barcode 523, the two-dimensional code 524, and the like. The information for specifying the biometric information of the user may be a character string or the like that represents the identification information or the like.

For example, the information managing device 309 of the image forming apparatus 101 stores the identification information represented by the barcode 523, the biometric information of the user (for example, the face image 521 or the like), and the attribute information, in the user information DB 321 of the data storage device 102, or the like, in association. Meanwhile, the user information creating device 307 creates the user information 540 that includes the barcode 523 (the example of the information for specifying the biometric information of the user) corresponding to the biometric information of the user.

Accordingly, as illustrated in FIG. 5D, in the case where the user information reader 306 reads the user information 540 that does not include the biometric information, it is possible to acquire the biometric information of the user and the attribute information from the user information DB 321 by using the identification information represented by the barcode 523.

Just as described, the user information created by the user information creating device 307 includes the biometric information of the user or the image, the code, the character string, or the like that represents the information for specifying the biometric information of the user.

FIG. 5E illustrates an example image of a copied image 550 that is printed by the image forming unit 308 of the image forming apparatus 101. In the example illustrated in FIG. 5E, on the copied image 550, the character string 511, which is included in the document data 510 illustrated in FIG. 5A, is printed by the visible printing, and the user information 520 illustrated in FIG. 5B is printed by the invisible printing. Just as described, the user information 520, which is invisibly printed, is at least partially printed in an overlapping manner with the document data 510, which is visibly printed. This makes the user information 520, which is invisibly printed, be more difficult to be seen.

In the case where the document data 510, which is visibly printed, and the user information 520, which is invisibly printed, are printed in the overlapping manner, a printing order of the visible printing and the invisible printing is desirably considered depending on the type of the invisible printing.

For example, in the case where the invisible printing is the printing using the IR toner, an IR ink, an IR ribbon, or the like that can read by the infrared light, the visible printing is desirably performed over the invisible printing. This is because of a case where, due to gloss or the like, for example, presence/absence and the like of the invisible printing, for which the IR toner or the like is used and which can be read by the infrared light, can be recognized according to intensity of the light. The printing, for which the IR toner or the like is used and which can be read by the infrared light, can be read by using the infrared light or the like even in the case where the invisible printing is performed under the visible printing.

Meanwhile, in the case where the invisible printing is the printing that can be read by the ultraviolet light, the invisible printing is desirably performed over the visible printing. This is because of a case where the invisible printing, which can be read by the ultraviolet light, cannot be read when being performed under the visible printing.

FIG. 5F illustrates an image of another example of a copied image 560 that is printed by the image forming unit 308 of the image forming apparatus 101. In the example illustrated in FIG. 5E, on the copied image 560, the character strings 511, which is visibly printed and included in the document data 510 illustrated in FIG. 5A, and the user information 520, which is invisibly printed and illustrated in FIG. 5B, are printed in different areas from each other to prevent an overlap. When the copied image 560 is printed just as described, an effect of facilitating reading of the user information 520, which is invisibly printed, can be expected.

In the case of double-sided copying, the image forming unit 308 desirably and invisibly prints the user information on both faces. This is because the user information can be read from the copied image on the back surface even when the copied image is re-copied, for example. Note that an example of processing in the case where the copied image is re-copied will be described later in a second embodiment.

In addition, in the case of scale-up/down copying or multiple-page copying, the image forming unit 308 desirably performs the invisible printing without scaling up/down the user information. This is because of a case where it becomes difficult to read the user information when the user information is scaled down and printed invisibly, and because of a case where all the information cannot be printed when the user information is scaled up and printed invisibly, for example.

### Print Processing

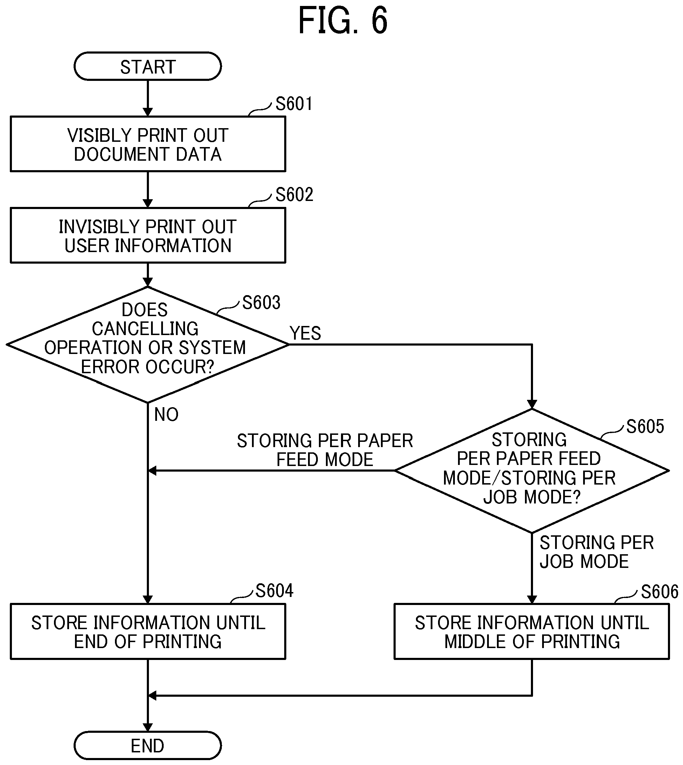

FIG. 6 is a flowchart illustrating an example of print processing according to the first embodiment. This processing represents a specific example of the processing in step S405 illustrated in FIG. 4.

In step S601, the image forming unit 308 of the image forming apparatus 101 visibly prints the document data created by the copy processor 305 on the print medium such as paper.

In step S602, the image forming unit 308 invisibly prints the user information created by the user information creating device 307 on the print medium. As described above, the printing order in the processing in step S601 and step S602 is desirably changed according to the type of the invisible printing.

In step S603, the information managing device 309 of the image forming apparatus 101 determines whether a canceling operation by the user or a system error such as a jam error occurs.

If the canceling operation or the system error does not occur ("NO" in S603), in step S604, the information managing device 309 stores the user information up to end of printing in the user information DB 321 of the data storage device 102, or the like, for example.

On the other hand, if the canceling operation or the system error occurs ("YES" in S603), in step S605, the information managing device 309 branches the processing according to a processing mode. As the processing mode, the information managing device 309 is set to one of the two processing modes that are a storing per paper feed mode in which the user information is stored per paper feed and a storing per job mode in which the user information is stored per job.

If the processing mode is the storing per paper feed mode, the processing proceeds to step S604, and, as usual, the information managing device 309 stores the user information that is obtained up to the end of the printing in the user information DB 321 of the data storage device 102, or the like, for example.

If the processing mode is the storing per job mode, the processing proceeds to step S606, and the information managing device 309 stores the user information that is obtained up to the canceling operation or the system error in the user information DB 321 of the data storage device 102, or the like, for example.

### Sequence Chart

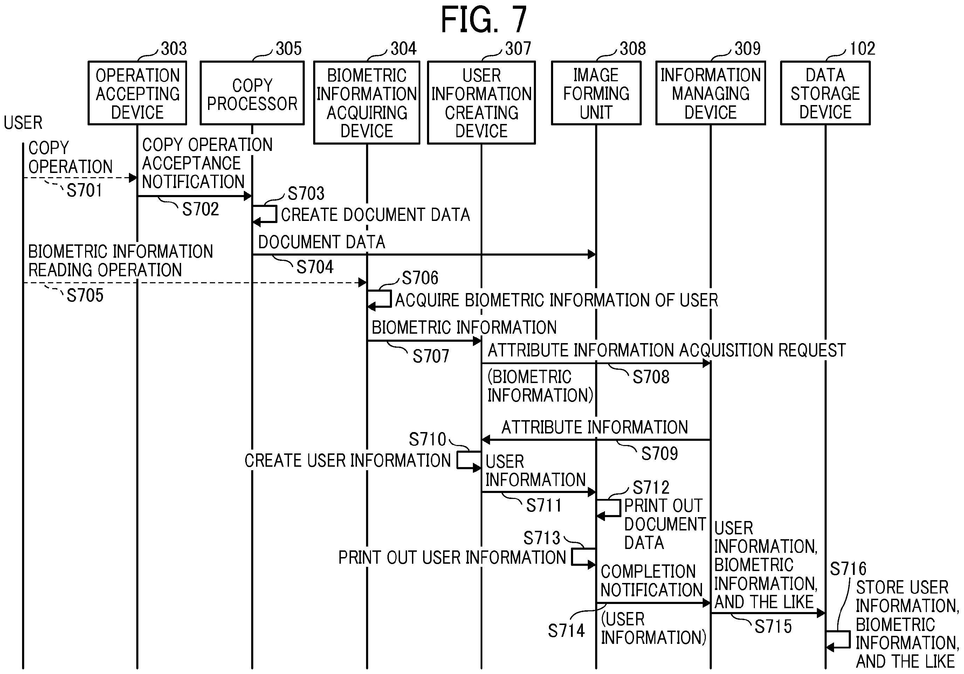

FIG. 7 is a sequence chart illustrating an example of the copy processing according to the first embodiment. This processing illustrates a further specific processing example of the copy processing illustrated in FIG. 6. A description will herein be made on an assumption that the user information is not printed on the document as the copy target.

In step S701, the user instructs the copy operation. For example, the user sets the document in the document reading section of the scanner 250 in the image forming apparatus 101, selects the "COPY" button or the like from the operation screen displayed on the operation panel 220, to instruct to perform the copy operation.

In step S702, in response to accepting the copy operation by the user, the operation accepting device 303 sends a notification to the copy processor 305 indicating that the copy instruction is accepted.

In step S703, the copy processor 305 reads the document as the copy target by using the scanner 250, and creates the document data to be printed on the copied image.

In step S704, the copy processor 305 transfers the created document data to the image forming unit 308. For example, the copy processor 305 may store the document data in the storage device 310 and notify the image forming unit 308 of a storage destination of the stored document data.

In step S705, the user performs a biometric information reading operation. For example, the user follows a display screen that is displayed on the operation panel 220 of the image forming apparatus 101 or the like and prompts the biometric information reading operation, and thereby performs the biometric information reading operation.

For example, in the case where the biometric information is the face image, the user faces a direction of the camera 260 so that his/her face enters the capturing range of the camera 260. Meanwhile, in the case where the biometric information is the fingerprint, the user places his/her finger on the biometric sensor 270.

For example, the biometric information of the user may be acquired by performing the biometric authentication when the user logs in to the image forming apparatus 101, or the like. In such a case, the processing in step S706 can be omitted.

In steps S706 and S707, the biometric information acquiring device 304 of the image forming apparatus 101 acquires the biometric information of the user, and transfers the acquired biometric information to the user information creating device 307. For example, the biometric information acquiring device 304 may store the acquired biometric information in the storage device 310 and notify the user information creating device 307 of a storage destination of the stored biometric information.

In steps S708 and S709, the user information creating device 307 acquires the attribute information to be added to the user information (for example, the apparatus name, the model, and the location information of the image forming apparatus 101, the date and the time, the number of copies, the print image, and the like) from the information managing device 309. At this time, the user information creating device 307 may transfer the biometric information, which is accepted from the biometric information acquiring device 304, to the information managing device 309.

In step S710, the user information creating device 307 creates the user information as illustrated in FIGS. 5B to 5D. For example, in the case where the biometric information is the face image, as illustrated in FIG. 5B, the user information creating device 307 creates the user information 520 that includes the face image 521, the two-dimensional code 524 acquired by coding the attribute information, and the like. Preferably, the user information 520 includes the identification information for identifying the user information 520, the barcode 523 acquired by coding a control number or the like.

Similarly, in the case where the biometric information is the fingerprint, as illustrated in FIG. 5C, the user information creating device 307 creates the user information 530 that includes the fingerprint image 531, the two-dimensional code 524, the barcode 523, and the like. As illustrated in FIG. 5D, the user information creating device 307 may create the user information 540 that does not include the biometric information but includes the barcode 523 (an example of the information for specifying the biometric information).

In step S711, the user information creating device 307 transfers the user information that is created to the image forming unit 308. For example, the copy processor 305 may store the user information that is created in the storage device 310 and notify the image forming unit 308 of a storage destination of the user information that is stored.

In Steps S712 and S713, the image forming unit 308 of the image forming apparatus 101 visibly prints the document data, invisibly prints the user information, and thereby prints the copied image as illustrated in FIG. 5E or FIG. 5F, for example. The processing in step S713 may be executed before step S712 depending on the type of the invisible printing as described above.

In step S714, the image forming unit 308 notifies the information managing device 309 that the printing is completed. At this time, the image forming unit 308 may transfer the user information, which is accepted from the user information creating device 307, to the information managing device 309.

In step S715, the information managing device 309 of the image forming apparatus 101 sends the user information, the biometric information, and the like to the data storage device 102.

In step S716, the data storage device 102 stores the user information, the biometric information, and the like, which are sent from the information managing device 309, in the user information DB 321 or the like.

Preferably, together with the identification information for identifying the user information, the control number, and the like, the information managing device 309 sends the user information, the biometric information, and the like to the data storage device 102. Then, the data storage device 102 stores the user information, the biometric information, and the like in association with the identification information for identifying the user information, the control number, and the like in the user information DB 321.

### User Information Display Processing

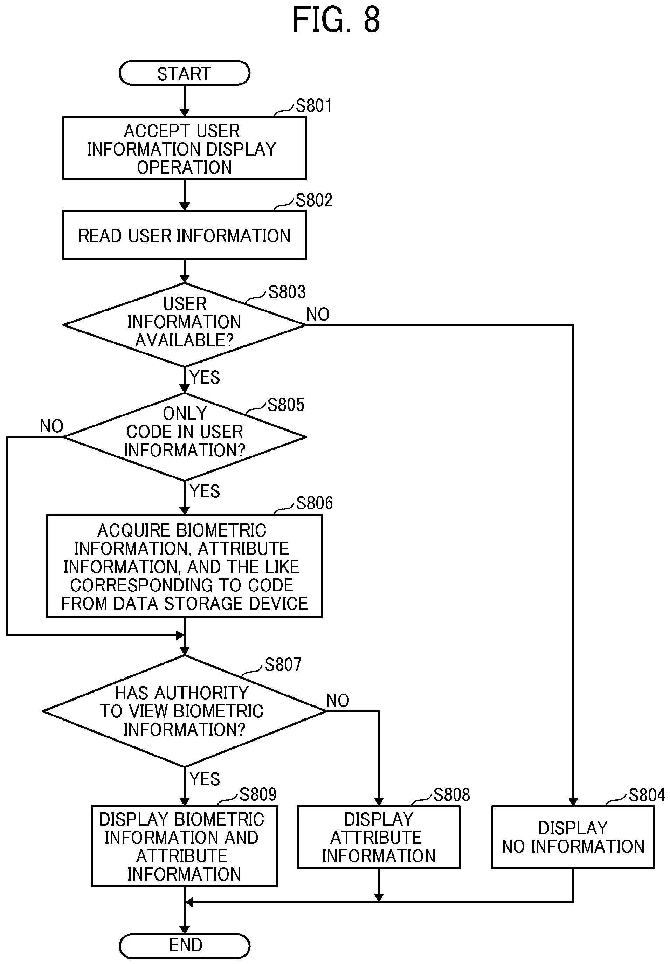

FIG. 8 is a flowchart illustrating an example of user information display processing according to the first embodiment. This processing is an example of processing in the case where the user, the administrator, or the like displays the user information that is embedded in the copied document by using the image forming apparatus 101.

In step S801, when the operation accepting device 303 of the image forming apparatus 101 accepts a user information display operation by the user, the administrator, or the like, the image forming apparatus 101 executes processing in step S802 onward. For example, the user sets the document, on which the copied image is printed, in the document reading section of the scanner 250 in the image forming apparatus 101, selects a "USER INFORMATION DISPLAY" button from the operation screen displayed on the operation panel 220, or the like, to instruct to perform the user information display operation.

In step S802, the user information reader 306 of the image forming apparatus 101 uses the scanner 250 to read the user information from the document set in the document reading section, as illustrated in FIGS. 5B to 5D, for example. The user information read by the user information reader 306 is temporarily stored in the storage device 310 or the like, for example.

In step S803, the display controller 302 of the image forming apparatus 101 determines whether the user information reader 306 can acquire the user information, that is, whether the user information is available in the set document.

If the user information is not available ("NO" at S803), the processing proceeds to step S804, and the display controller 302 instructs the operation panel 220 or the like to display a display screen indicating that the user information is not available in the set document. On the other hand, if the user information is available ("YES" at S803), the processing proceeds to step S805.

When the processing proceeds to step S805, the display controller 302 determines whether the read user information is, for example, only the code as illustrated in FIG. 5D or includes the biometric information as illustrated in FIGS. 5B and 5C.

If the user information is only the code ("YES" at S805), the processing proceeds to step S806. On the other hand, if the user information includes the biometric information ("NO" at S805), the processing proceeds to step S807.

When the processing proceeds to step S806, the display controller 302 acquires the biometric information, the attribute information, and the like from the information managing device 309. The biometric information, the attribute information, and the like are stored in the data storage device 102 in association with the identification information and the like, which is represented by the code (for example, the barcode 523 or the like) included in the user information.

In step S807, the display controller 302 determines whether the user has authority to view the biometric information.

As an example, when the user logs in to the image forming apparatus 101, the image forming apparatus 101 performs authentication such as the biometric authentication, integrated circuit (IC) card authentication, or document reading sectionword authentication to identify the user. Then, the image forming apparatus 101 determines whether the user has the authority to view the biometric information on the basis of authority information for each user that is stored in advance in the storage device 310, the data storage device 102, or the like.

As another example, in step S801 or step S807 illustrated in FIG. 8, the image forming apparatus 101 may authenticate the user and determine whether the user has the authority to view the biometric information.

If the user has no authority to view the biometric information ("NO" at S807), the processing proceeds to step S808, and the display controller 302 displays the attribute information on the operation panel 220 or the like.

As an example, the display controller 302 decodes the two-dimensional code 524, which is included in the user information illustrated in FIGS. 5B to 5D, to extract the attribute information (for example, the character string), and displays the attribute information that is extracted on the operation panel 220 or the like. As another example, the display controller 302 may display the two-dimensional code 524, the barcode 523, and the like included in the user information on the operation panel 220 or the like. Furthermore, the display controller 302 may display the attribute information, which is acquired in step S806, on the operation panel 220 or the like.

On the other hand, if the user has the authority to view the biometric information ("YES" at S807), the processing proceeds to step S809, and the display controller 302 displays the biometric information and the attribute information on the operation panel 220 or the like. In this way, the user, the administrator, or the like can identify the user who copies the document.

As it has been described so far, according to the present embodiment, when the user copies the document, the image forming apparatus 101 embeds the biometric information of the user in the copied image. Thus, it is possible to identify the user who copies the copied image.

Since the image forming apparatus 101 invisibly prints the user information, it is possible to embed the user information in the copied image with hardly no influence on the copied image.

Since the image forming apparatus 101 has the function of reading and displaying the user information, which is invisibly printed on the copied image, it is possible to further easily identify the user who copies the copied image.

When the attribute information related to the copy processing is added to the user information, it is possible to also specify the status of the copy processing (for example, the apparatus name, the model, the location information, the number of copied, the print image, and the like).

In the second embodiment, a description will be made on an example of preferred processing in the case where the copied image, which is copied in the first embodiment and in which the user information is embedded, is copied (re-copied). Note that a hardware configuration and a functional configuration of the image forming apparatus 101 according to the second embodiment may be the same as the hardware configuration and the functional configuration of the image forming apparatus 101 according to the first embodiment.

### Copy Processing

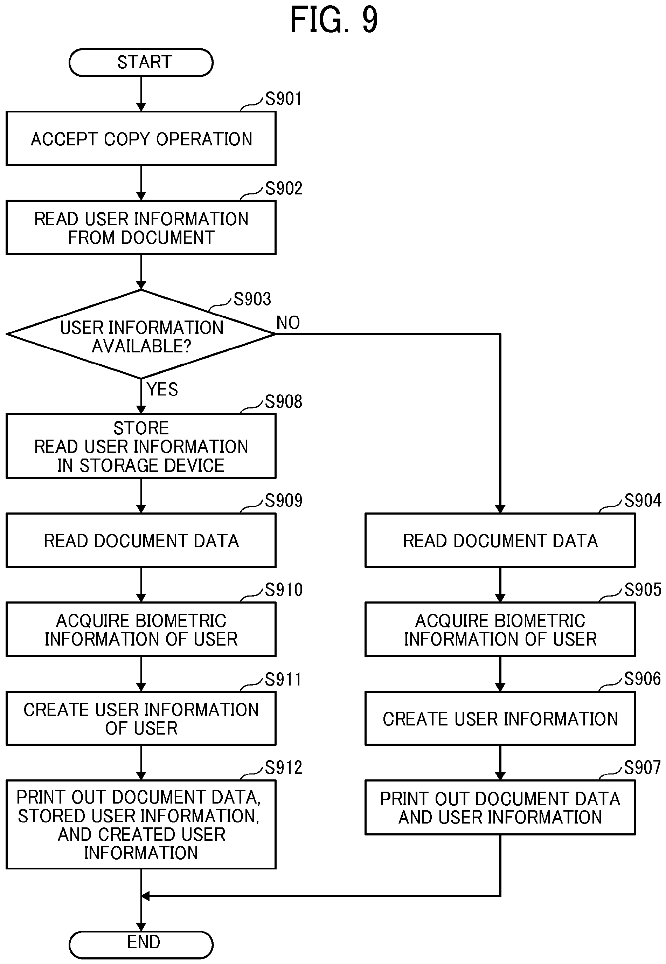

FIG. 9 is a flowchart illustrating an example of copy processing according to the second embodiment. A basic processing content is the same as the processing content of the copy processing according to the first embodiment illustrated in FIG. 4. Thus, a detailed description on the same processing content as in the first embodiment will not be made.

In step S901, when the operation accepting device 303 of the image forming apparatus 101 accepts the copy operation by the user, the image forming apparatus 101 executes processing in step S902 onward. For example, the user sets the document in the document reading section of the scanner 250 in the image forming apparatus 101, and selects the "COPY" button from the operation screen displayed on the operation panel 220, to instruct the copy operation.

In step S902, the user information reader 306 of the image forming apparatus 101 uses the scanner 250 to read the user information embedded in the document that is set in the document reading section.

In step S903, the user information reader 306 of the image forming apparatus 101 determines whether the user information can be acquired, that is, whether the user information is available in the set document.

If the user information is not available ("NO" at S903), the image forming apparatus 101 executes the processing in steps S904 to S907. This processing is the same as the processing in steps S402 to S405 in the copy processing according to the first embodiment illustrated in FIG. 4. Thus, a description thereon will not be made herein.

On the other hand, if the user information is available ("YES" at S903), the image forming apparatus 101 executes the processing in step S908 onward.

In step S908, the user information reader 306 temporarily stores the read user information in the storage device 310 or the like.

In step S909, the copy processor 305 of the image forming apparatus 101 controls the scanner 250 to read the information that is visibly printed on the document set in the document reading section, and creates the document data that is visibly printed on the copied image. The document data created by the copy processor 305 is temporarily stored in the storage device 310 or the like, for example.

In step S910, the biometric information acquiring device 304 of the image forming apparatus 101 acquires the biometric information of the user who performs the copy operation. A method for acquiring the biometric information of the user is the same as the method in the first embodiment.

In step S911, the user information creating device 307 of the image forming apparatus 101 creates the user information that includes one of the biometric information of the user acquired by the biometric information acquiring device 304 and the information for specifying the biometric information of the user.

In step S912, the image forming unit 308 of the image forming apparatus 101 prints the document data created by the copy processor 305, the user information stored in the storage device 310 by the user information reader 306, and the user information created by the user information creating device 307.

For example, the image forming unit 308 visibly prints the document data created by the copy processor 305, and invisibly prints the user information stored in the storage device 310 by the user information reader 306 and the user information created by the user information creating device 307.

### Sequence Chart

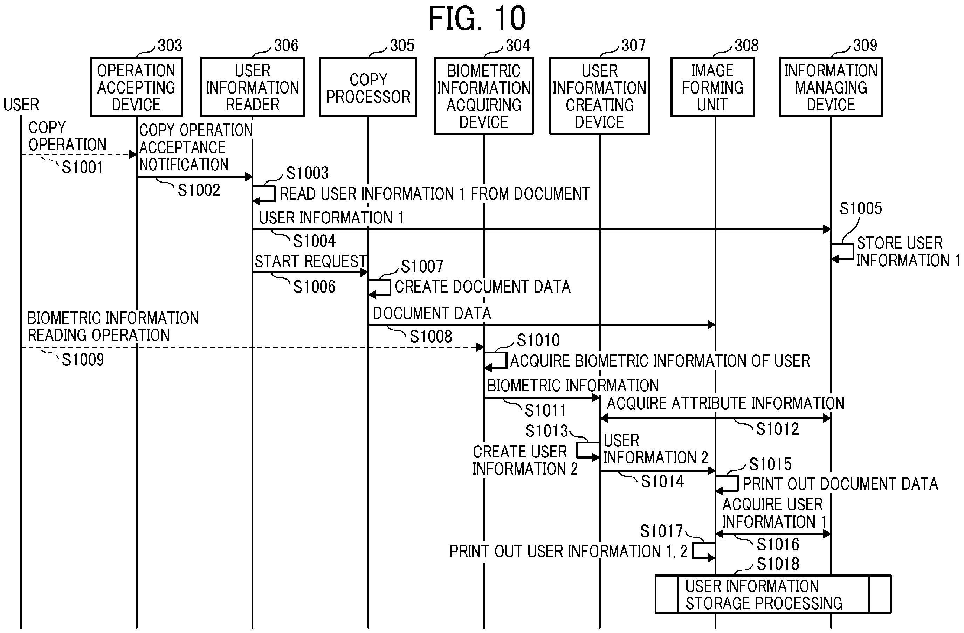

FIG. 10 is a sequence chart illustrating an example of the copy processing according to the second embodiment. This processing is a specific copy processing example in the case where the user information, which is invisibly printed, is printed on the document as the copy target. A basic processing content is the same as the processing content of the copy processing according to the first embodiment illustrated in FIG. 7. Thus, a specific description on the same processing content as in the first embodiment will not be made.

In step S1001, the user instructs to perform the copy operation. For example, the user sets the document in the document reading section of the scanner 250 in the image forming apparatus 101, and selects the "COPY" button from the operation screen displayed on the operation panel 220, to instruct to perform the copy operation.

In step S1002, in response to accepting the copy operation by the user, the operation accepting device 303 notifies the user information reader 306 that the copy operation is accepted.

In step S1003, the user information reader 306 of the image forming apparatus 101 controls the scanner 250 to read the user information (hereinafter referred to as user information 1) that is invisibly printed on the document set in the document reading section.

In step S1004, the user information reader 306 transfers the user information 1 that is read, to the information managing device 309. Then, in step S1005, the information managing device 309 stores the user information 1 that is accepted, in the storage device 310 or the like.

In step S1006, the user information reader 306 requests the copy processor 305 to initiate the copy processing.

In step S1007, the copy processor 305 uses the scanner 250 to read the information visually printed on the document as the copy target, and creates the document data to be visibly printed on the copied image. Then, in step S1008, the copy processor 305 transfers the created document data to the image forming unit 308.

In step S1009, the user instructs to perform the biometric information reading operation. For example, the user follows the display screen that is displayed on the operation panel 220 of the image forming apparatus 101 or the like and prompts the biometric information reading operation, to instruct to perform the biometric information reading operation.

For example, the biometric information of the user may be acquired by performing the biometric authentication when the user logs in to the image forming apparatus 101, or the like. In such a case, the processing in step S1009 can be omitted.

In steps S1010 and S1011, the user information acquiring device 304 of the image forming apparatus 101 acquires the biometric information of the user, and transfers the acquired biometric information to the user information creating device 307.

In step S1012, the user information creating device 307 acquires the attribute information to be added to the user information from the information managing device 309. At this time, the user information creating device 307 may transfer the biometric information, which is accepted from the biometric information acquiring device 304, to the information managing device 309.

In step S1013, the user information creating device 307 creates the user information (hereinafter referred to as user information 2) as illustrated in FIGS. 5B to 5D, for example.

In step S1014, the user information creating device 307 transfers the user information 2 that is created, to the image forming unit 308.

In step S1015, the image forming unit 308 of the image forming apparatus 101 visibly prints the document data created by the copy processor 305.

In step S1016, the image forming unit 308 acquires the user information 1 from the information managing device 309, which is stored at S1005.

In step S1017, the image forming unit 308 invisibly prints the user information 1 and the user information 2.

In step S1017, for example, similar to the processing in steps S714 to S716 illustrated in FIG. 7, the image forming unit 308 and the information managing device 309 store the user information, the biometric information, and the like in the data storage device 102.

The copy process illustrated in FIG. 10 is an example. For example, in steps S1015 to S1017 illustrated in FIG. 10, the image forming unit 308 may invisibly print the user information 1 and the user information 2 and thereafter visibly print the document data. In addition, in steps S1012 and S1013 illustrated in FIG. 10, the user information creating device 307 may acquire, in addition to the attribute information, the user information 1 from the information managing device 309 and create the user information 2 that includes the user information 1.

In each of the above processing, in the case where a first user copies a first copied image in which the user information of a second user (user information 1) is embedded, the user information reader 306 of the image forming apparatus 101 reads the user information of the second user (user information 1) that is embedded in the first copied image. Furthermore, the image forming apparatus 101 uses the image forming unit 308 to embed the user information of the first user (user information 2) and the user information of the second user (user information 1) in a second copied image that is printed according to the copy operation by the first user.

Accordingly, the user, the administrator, or the like can specify, in addition to the first user who copies the copied image, the second user who has copied an original of the copied document. Even in the case where the user information of multiple users is included in the user information of the second user, the processing can be executed in a similar manner.

In a third embodiment, a description will be made on an example of processing in the case where the image forming apparatus 101 determines whether the copying can be performed on the basis of the user information that is embedded in the document as the copy target.

### Functional Configuration

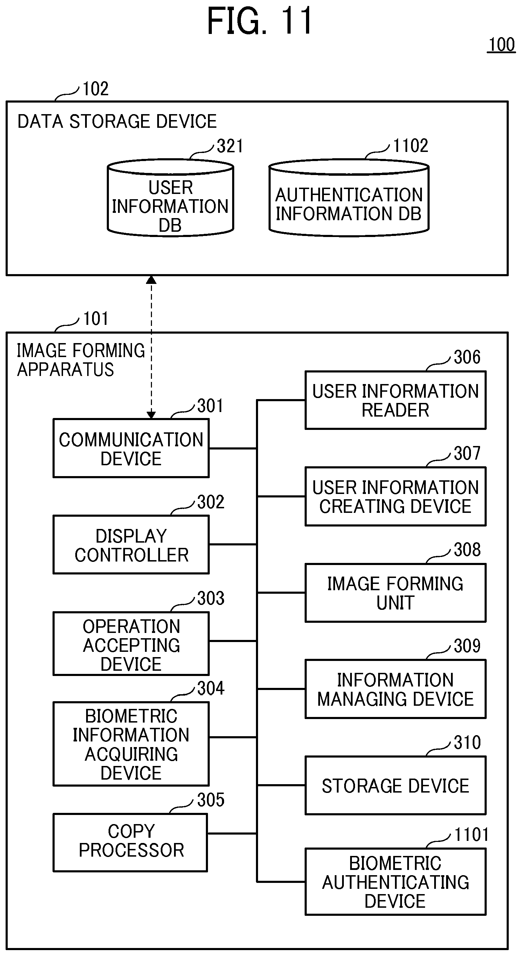

FIG. 11 is a diagram illustrating an example of a functional configuration of an image forming system according to the third embodiment. As illustrated in FIG. 11, the image forming apparatus 101 according to the third embodiment has a biometric authenticating device 1101 in addition to the functional configuration of the image forming apparatus 101 according to the first embodiment illustrated in FIG. 3.

In the data storage device 102, an authentication information DB 1102 that is used by the biometric authenticating device 1101 for authentication is stored.

The functional configuration of the image forming system 100 according to the third embodiment other than the above may be the same as the functional configuration of the image forming system 100 according to the first embodiment illustrated in FIG. 3. In addition, the authentication information DB 1102 may be stored in the storage device 310 of the image forming apparatus 101.

The biometric authenticating device 1101 uses the biometric information of the user acquired by the biometric information acquiring device 304 and the authentication information DB 1102 to authenticate the user, and thus can identify the user.

In the authentication information DB 1102, biometric feature information, authority information, and the like are stored for each of the multiple users who are permitted to use the image forming apparatus 101.

For example, in the case where the biometric authentication is face authentication, the biometric authenticating device 1101 uses the biometric information acquiring device 304 to acquire the face image of the user, and extracts facial feature information (a feature amount) from the face image of the user. Then, the biometric authenticating device 1101 calculates a similarity between the facial feature information of the user stored in the authentication information DB 1102 and the extracted facial feature information, and determines whether the similarity is equal to or less than a threshold.

In the above processing, in the case where a facial feature amount, whose similarity to the extracted facial feature amount is equal to or less than the threshold, is stored in the authentication information DB 1102, the biometric authenticating device 1101 determines that the authentication of the user is successful, and acquires the user information that corresponds to the facial feature information whose similarity is equal to or less than the threshold. In this way, the biometric authenticating device 1101 can identify the user who uses the image forming apparatus 101, and can acquire the user information, the user authority information, and the like.

Furthermore, the biometric authenticating device 1101 functions as a determining device that determines whether the copying can be performed on the basis of the user authority information that is acquired.

### Processing Flow

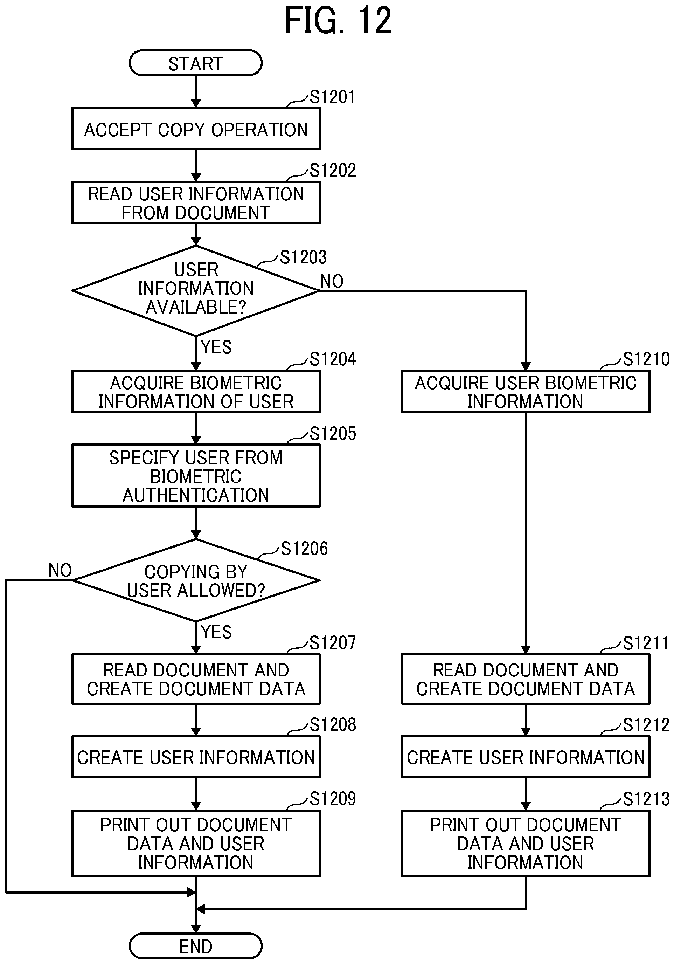

FIG. 12 is a flowchart illustrating an example of copy processing according to the third embodiment. A detailed description on a processing content that is the same as the processing contents of the copy processing according to the first and second embodiments will not be made herein.

In step S1201, when the operation accepting device 303 of the image forming apparatus 101 accepts the copy operation by the user, the image forming apparatus 101 executes processing in step S1202 onward. For example, the user sets the document in the document reading section of the scanner 250 in the image forming apparatus 101, and selects the "COPY" button from the operation screen displayed on the operation panel 220, to instruct to perform the copy operation.

In step S1202, the user information reader 306 of the image forming apparatus 101 controls the scanner 250 to read the user information embedded in the document that is set in the document reading section.

In step S1203, the user information reader 306 of the image forming apparatus 101 determines whether the user information can be acquired, that is, whether the user information is available in the set document.

If the user information is available ("YES" at S1203), the processing proceeds to step S1204. On the other hand, if the user information is not available ("NO" at S1203), the processing proceeds to step S1210.

When the processing proceeds to step S1204, the biometric information acquiring device 304 of the image forming apparatus 101 acquires the biometric information of the user who performs the copy operation.

In step S1205, the biometric authenticating device 1101 of the image forming apparatus 101 uses the biometric information of the user acquired by the biometric information acquiring device 304 and the authentication information DB 1102 stored in the data storage device 102 to identify the user by the biometric authentication.

In step S1206, the biometric authenticating device 1101 determines whether the specified user is permitted to copy the document in which the user information is embedded. For example, the biometric authenticating device 1101 acquires the user authority information from the authentication information DB 1102. Then, in the case where the user has copying authority, the biometric authenticating device 1101 determines that the user is permitted to copy. On the other hand, if the user does not have the copying authority, the biometric authenticating device 1101 determines that the user is not permitted to copy.

If the user is not permitted to copy, the image forming apparatus 101 terminates the copy processing. On the other hand, if the user is permitted to copy, the processing proceeds to step S1207.

When the processing proceeds to step S1207, the copy processor 305 of the image forming apparatus 101 uses the scanner 250 to read the information that is visibly printed on the document set in the document reading section, and creates the document data to be printed on the copied image.

In step S1208, the user information creating device 307 of the image forming apparatus 101 creates the user information that includes one of the biometric information of the user acquired by the biometric information acquiring device 304 and the information for specifying the biometric information of the user.

In step S1209, the image forming unit 308 of the image forming apparatus 101 prints the document data created by the copy processor 305 and the user information created by the user information creating device 307. For example, the image forming unit 308 visibly prints the document data created by the copy processor 305, and invisibly prints the user information created by the user information creating device 307.

As another example, similar to the second embodiment, the image forming unit 308 may print the document data created by the copy processor 305, the user information read by the user information reader 306, and the user information created by the user information creating device 307.

Meanwhile, when the processing proceeds from step S1203 to step S1210, the biometric information acquiring device 304 of the image forming apparatus 101 acquires the biometric information of the user who performs the copy operation.

In step S1211, the copy processor 305 of the image forming apparatus 101 uses the scanner 250 to read the information that is visibly printed from the document set in the document reading section, and creates the document data to be printed on the copied image.

In step S1212, the user information creating device 307 of the image forming apparatus 101 creates the user information that includes one of the biometric information of the user acquired by the biometric information acquiring device 304 and the information for specifying the biometric information of the user.

In step S1213, the image forming unit 308 of the image forming apparatus 101 prints the document data created by the copy processor 305 and the user information created by the user information creating device 307. For example, the image forming unit 308 visibly prints the document data created by the copy processor 305, and invisibly prints the user information created by the user information creating device 307.

As another example, similar to the second embodiment, the image forming unit 308 may print the document data created by the copy processor 305, the user information read by the user information reader 306, and the user information created by the user information creating device 307.

In the above processing, the image forming apparatus 101 can determine whether the document as the copy target can be copied based on the user information that is embedded in the document as the copy target.

The processing illustrated in FIG. 12 is an example of the processing for the image forming apparatus 101 to determine whether the document as the copy target can be copied on the basis of the user information that is embedded in the document as the copy target.

For example, the image forming apparatus 101 may include a determining device (CPU) for determining that the document as the copy target cannot be copied in the case where two or more pieces of the user information are embedded in the document as the copy target. In this way, the image forming apparatus 101 can prohibit the copying of the copied image in which the user information is embedded.

As it has been described so far, according to the above-described embodiments, the image forming apparatus 101 that performs the copying can identify the user who performs the copying from the copied image.

The above-described embodiments are illustrative and do not limit the present invention. Thus, numerous attribute modifications and variations are possible in light of the above teachings. For example, elements and/or features of different illustrative embodiments may be combined with each other and/or substituted for each other within the scope of the present invention.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

## Claims

1. An image forming apparatus (101) comprising:
an operation accepting device (303) configured to receive an instruction for copying an image of a document from a user,
a biometric information acquiring device (304) configured to acquire biometric information of the user, and
an image forming unit (308) configured to embed user information in the image, the user information including one of the biometric information of the user and information for specifying the biometric information of the user, and print the image having the user information embedded, on a recording medium to output a copied image.

2. The image forming apparatus (101) according to claim 1, wherein
the image forming unit (308) prints the user information of the user in a manner that makes the printed user information hardly visible.

3. The image forming apparatus (101) according to claim 2, wherein
the image forming unit (308) prints the user information of the user by using one of a toner, an ink, and a ribbon by which the user information of the use can be read with infrared light or ultraviolet light.

4. The image forming apparatus (101) according to any one of claims 1 to 3, further comprising:
a user information reader (306) configured to read the user information that has been embedded in the copied image, in response to an instruction for displaying user information.

5. The image forming apparatus (101) according to claim 4, further comprising:
a display controller (302) configured to display information on the user who has instructed the copying of the image based on the read user information.

6. The image forming apparatus (101) according to any one of claims 1 to 5,
wherein
when the user who instructs copying of the image of the document is a first user, and
the image of the document to be copied includes user information of a second user different from the first user, the apparatus (101) further comprising:
a user information reader (306) configured to read user information of the second user that has been embedded in the image of the document, and
the image forming unit (308) further embeds the user information of the second user in addition to the user information of the second user, in the image to be printed out.

7. The image forming apparatus according to any one of claims 1 to 6, further
comprising:
a user information reader (306) configured to read user information that has been embedded in the image of the document, and determines whether copying of the document is allowed based on the user information that is read.

8. The image forming apparatus according to any one of claims 1 to 7, wherein
the user information further includes attribute information related to copy processing that is executed according to the user instruction for copying.

9. The image forming apparatus according to any one of claims 1 to 8, wherein
when the instruction for copying instructs to perform double-sided copying, the image forming unit (308) embeds the user information on both sides of the recording medium.

10. The image forming apparatus according to any one of claims 1 to 9, wherein
when the instruction for copying instructs to perform one of scale-up copying, scaledown copying, and multiple-page copying, each of which requires reduction in size of the copied image,
the image forming unit (308) embeds the user information without reducing a size of the user information.

11. The image forming apparatus according to any one of claims 1 to 10, further
comprising:
a data storage device (102) that stores one of the biometric information of the user acquired by the image forming apparatus and the user information embedded in the copied image.

12. An image forming system (100) comprising:
the image forming apparatus (101) according to any one of claims 1 to 11; and
a data storage device (102) communicably connected with the image forming apparatus, including a memory that stores one of the biometric information of the user acquired by the image forming apparatus and the user information embedded in the copied image.

13. An image forming method comprising:
receiving an instruction for copying an image of a document from a user,
acquiring biometric information of the user;
embedding user information in the image, the user information including one of the biometric information of the user and information for specifying the biometric information of the user; and
printing the image having the user information embedded, on a recording medium to output a copied image.

14. A carrier means for storing a computer readable code for carrying out the image forming method of claim 13.
